# EUROPÄISCHE PATENTSCHRIFT

(11) **EP 3 006 766 B1**
(45) Veröffentlichungstag und Bekanntmachung des Hinweises auf die Patenterteilung: **15.05.2019**
(21) Anmeldenummer: 15187460.9
(22) Anmeldetag: 29.09.2015
(51) Int. Cl.: F16F 7/00

(54) **FEDERNDES ANDRUCKELEMENT**
RESILIENT PRESSURE-APPLYING ELEMENT
ELEMENT DE PRESSION A RESSORTS

(30) Priorität: 07.10.2014 DE 102014114528
(43) Veröffentlichungstag der Anmeldung: 13.04.2016
(73) Patentinhaber: Fibro GmbH, 74855 Hassmersheim (DE)
(72) Erfinder: Domay, Steffen, 74861 Herbolzheim (DE)
(74) Vertreter: Staeger & Sperling Partnerschaftsgesellschaft mbB

(56) Entgegenhaltungen:
- DE-A1- 19 635 073
- DE-A1-102005 018 900
- DE-A1-102005 032 676
- US-A1- 2011 283 478

## Beschreibung

Die Erfindung bezieht sich auf ein federndes Andruckelement nach Anspruch 1 und betrifft demnach Andruckelemente für den Werkzeug-, Vorrichtungs- und Maschinenbau.

Derartige Andruckelemente werden zum Beispiel als Auswerfer, Dämpfungsstifte sowie als An- oder Abdrückelemente in den verschiedensten Bereichen des Werkzeug-, Vorrichtungs- und Maschinenbaus eingesetzt. Sie dienen ferner für verschiedene Zwecke in Umformwerkzeugen, vornehmlich in Pressen und Stanzwerkzeugen sowie an den Formen von Spritzgießmaschinen, nämlich als Auswerfer.

Die Andruckelemente bilden in sich verkehrsfähige mechanische Bauelemente, die auf der Außenseite der Buchse typischerweise ein Gewinde tragen und damit an der gewünschten Lage am oder im Werkzeug festgelegt werden können. Der maximale Hub der bekannten Ausführungsformen ist sehr unterschiedlich und ist auf die jeweilige Anwendung angepasst.

Diejenigen aus dem Stand der Technik bekannten federnden Rasterelementen für Positionierzwecke, bei denen also der Druckstift mit einer flachen kugeligen Ausnehmung zusammenwirkt, sind bei der vorliegenden Erfindung nicht von Bedeutung und sind auch für die oben genannten Einsatzzwecke nicht geeignet.

Bei den eingangs erwähnten Anwendungszwecken treten nämlich hohe mechanische Belastungen bei den Hubbewegungen auf und es kommen Hübe bis etwa 80 mm oder mehr vor. Der Druckstift des Andruckelements muss daher aus dem Ende der Buchse um mindestens diese Strecke heraustreten können.

Bei vielen bekannten Ausführungsformen weist die Buchse einen Innenbund auf, an dessen innerer Schulter die äußere Außenschulter des Druckstiftes unmittelbar zur Anlage kommt. Die Stützlänge dieser Anordnung ist verglichen mit der vorkragenden Länge des Druckstiftes gering, so dass die Führung gegebenenfalls problematisch sein kann. Dies macht sich unter anderem dann bemerkbar, wenn das freie Ende des Druckstiftes auch Querkräfte erfährt, wie es zum Beispiel der Fall sein kann, wenn der Druckstift an einer Führungskurve anliegt. Durch die auf Verkanten wirkenden Querkräfte ergibt sich dann eine erhebliche Erhöhung des Widerstandes gegen Einschieben des Druckstiftes, was dazu führen kann, dass Druckstifte verbiegen und abbrechen. Ferner können andere mechanische Einflüsse, Verschleiß oder dergleichen dazu führen, dass die Druckstifte abbrechen und in das Werkzeug fallen. Je nach Einsatzzweck, können die abgebrochenen Druckstifte im Werkzeug erhebliche Werkzeugschäden anrichten. Bricht zum Beispiel ein Druckstift in einem Pressenwerkzeug ab und fällt in eine der Werkzeugpressenteile hinein bzw. verbleibt im Arbeitsraum der Presse, so kann nicht nur das mit der Presse umzuformende Werkstück beschädigt werden, was zu Ausschuss führt, sondern, es können vielmehr die Werkzeuge selbst unmittelbar geschädigt werden, was teurere Reparaturen, Stillstandzeiten oder ganze Betriebsunterbrechung nach sich ziehen kann. Im Stand der Technik gibt es diverse Bemühungen die metallischen Druckstifte so zu härten, dass eine längere Lebensdauer erzielt werden kann, was jedoch einen möglichen Schaden nicht verhindert, sondern gegebenenfalls nur verzögert, sobald der gehärtete Stift abbricht. Wenn der Stift eine höhere Härte hat wirkt sich dies im Fehlerfall zunehmend negativ auf den Folgeschaden aus, sobald ein solcher Stift im Arbeitsprozess zwischen bewegliche Werkzeugteile z. B. in einer Presse kommt.

DE 196 35 073 A1 beschreibt ein federndes Andruckelement mit den Merkmalen des Oberbegriffs des Anspruchs 1.

DE 10 2005 032 676 A1 beschreibt ein Andruckstück aus einem mit Molybdändisulfid gefüllten Kunststoffmaterial.

Der Erfindung liegt daher die Aufgabe zugrunde, vorbesagte Nachteile auszuräumen und ein federndes Andruckelement bereitzustellen, das den im Betrieb hohen mechanische Belastungen langlebig standhält, aber Werkzeugschäden möglichst vermeidet oder vollständig verhindert, insbesondere bei einem Bruch des Druckstiftes.

Diese Aufgabe wird gelöst mit einem Andruckelement mit den Merkmalen von Anspruch 1.

Bisher werden nur metallische Druckstifte eingesetzt, da nur diese die notwendigen Eigenschaften mitbringen. Grundgedanke der vorliegenden Erfindung ist es aber gerade, statt eines üblichen metallischen Druckstiftes, die seit Jahrzehnten bei allen Entwicklungen von federnden Andruckelementen verwendet werden, einen Druckstift aus einem spezifisches Kunststoffmaterial auszubilden, das einerseits weich genug ist, um im Fehlerfall d. h. zum Beispiel beim Bruch keinen Folgeschaden im Werkzeug zu erzeugen, andererseits aber die typische hohe mechanische Dauerbeständigkeit und erforderliche Festigkeit (insbesondere in axialer Bewegungsrichtung) aufweist. Erfindungsgemäß wird das Kunststoffmaterial des Druckstiftes als ein Gemisch aus im Wesentlichen einem teilkristallinen Thermoplast und einem in das Thermoplast eingebetteten Übergangsmetall, bei einer nicht beanspruchten Ausgestaltung auch aus einem Übergangsmetalloxid oder Übergangsmetallsulfit ausgebildet. Das Übergangsmetall oder Übergangsmetallsulfit sollte dabei in einer geeigneten Form, jedoch vorzugsweise in feinster Metallpulverform, weiter vorzugsweise homogen in das Thermoplast eingebettet werden.

In einer bevorzugten Ausführungsform der Erfindung wird demnach ein federndes Andruckelement zur bestimmungsgemäßen Verwendung für den Werkzeug-, Vorrichtungs- und Maschinenbau vorgeschlagen, bestehend aus einer zylindrischen Hülse, vorzugsweise einer Einschraubhülse, die an einem, eine zylindrische Öffnung aufweisenden Ende eine sich radial nach innen erstreckende Schulter als Anschlag für einen Druckstift aufweist, wobei in der Hülse der Druckstift auf- und abbewegbar gegen eine Feder gelagert ist und ein Betätigungsende des Druckstiftes durch die Öffnung aus der Hülse herausragt, wobei der Druckstift aus einem Kunststoffmaterial mit einem übergangsmetallischen Additiv besteht.

In einer bevorzugten Ausführungsform der Erfindung wird für den Druckstift ein Kunststoffmaterial verwendet, das eine Shorehärte von 80 bis 84 gemäß der Skala D aufweist. Die Ermittlung der Shorehärte erfolgt dabei gemäß dem internationalen Standard ISO 868 mit einem Shorehärtemessgerät, wie z. B. einem Durometer. Somit besteht mit der ISO 868, die in die nun harmonisierte ISO 7619 eingeflossen ist, ein weltweit gültiges Verfahren mit dem die Shore-Härte ermittelt werden kann. Die Spitze des Stahl-Stifts dringt bei Shore D in das Material ein. Die Eindringtiefe wird auf einer Skala von 0 -100 gemessen. Der Stahl-Stift hat entweder die Geometrie eines Kegelstumpfes (Shore A) oder einer Nadelspitze (Shore D).

Es ist weiter vorgesehen, ein Kunststoffmaterial zu verwenden, das eine Streckspannung von 75 bis 85 MPa gemäß der EN ISO 527 Testmethode aufweist. Die EN ISO 527 ist eine Europäische Norm für Kunststoffe zur Bestimmung der Zugeigenschaften, welche durch einen Zugversuch mit einer standardisierten Zugprüfmaschine ermittelt werden. Es ist weiter vorteilhaft für die Eigenschaften des Druckstiftes, wenn das Kunststoffmaterial ein E-Modul von 2900 bis 3500 MPa aufweist. Das angegebene E-Modul soll ebenfalls mit der Testmethode wie in der EN ISO 527 beschrieben ermittelt werden.

Um die erforderliche Härte des Druckstiftes zu erhalten, wird ferner vorteilhaft ein Kunststoff mit einer spezifischen Kugeldruckhärte vorgeschlagen. Erfindungsgemäß soll das Kunststoffmaterial in einer vorteilhaften Ausführung eine Kugeldruckhärte von 155 bis 185 MPa aufweisen. Die Ermittlung der Kugeldruckhärte soll nach dem Prüfverfahren der ISO 2039-1 erfolgen.

Eine weitere Kenngröße der für den Druckstift erfindungsgemäß vorgesehenen Kunststoffe besteht in einem spezifischen Wert für die Reißdehnung (Bruchdehnung). Die Reißdehnung ist ein Materialkennwert, der die bleibende Verlängerung einer Probe nach dem Bruch, bezogen auf die Anfangsmesslänge, angibt.

Die Bruchdehnung ist bei Werkstoffcharakterisierung eine von vielen Kenngrößen und charakterisiert die Verformungsfähigkeit (bzw. Duktilität) eines Werkstoffes und wird im Zugversuch ermittelt. Erfindungsgemäß ist vorgesehen einen Kunststoff zu verwenden, der eine Reißdehung gleich oder größer 50%, vorzugsweise zwischen 50% und 60% aufweist.

In einer bevorzugten Ausführungsform der Erfindung besteht das Kunststoffmaterial aus einem, vorzugsweise homogenen Gemisch aus im Wesentlichen den folgenden beiden Komponenten:
a. einem teilkristalliner Thermoplast und
b. einem in das Thermoplast eingebetteten Übergangsmetall oder
   - nicht beansprucht - einem Übergangsmetalldisulfid.

Als besonders geeignete Materialkombination hat sich eine Verbindung aus einem Polyamid oder Polyoxymethylen und Molybdän erwiesen.

Es kann ferner vorgesehen sein, dass das federnde Andruckelement so ausgebildet ist, dass die Hülse am Außenumfang ein Gewinde zur Montage aufweist. Es ist weiter bevorzugt, wenn die Feder als Schraubendruckfeder ausgebildet ist und/oder eine den Druckstift umschließende und ihn an der Hülse führende Gleitführüngsbuchse vorgesehen ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittansicht durch ein beispielhaftes erfindungsgemäßes Andruckelement mit einem federnden Druckstift, und
- Fig. 2: eine Aufsicht auf das Andruckelement aus Figur 1.

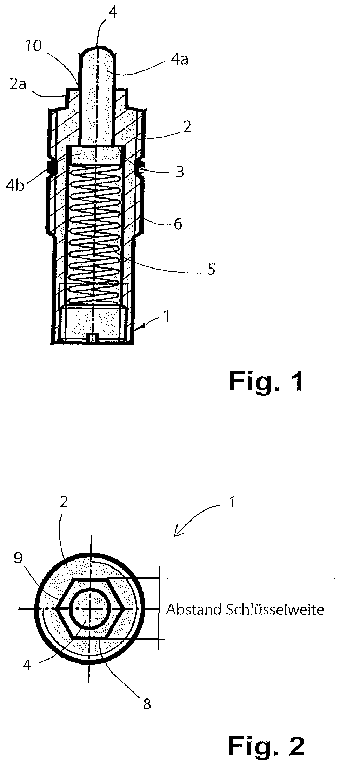

Das in Figur 1 gezeigte federndes Andruckelement 1 ist eine solches Andruckelement, das zur bestimmungsgemäßen Verwendung für den Werkzeug-, Vorrichtungs- und Maschinenbau ausgebildet ist. Das Andruckelement 1 besteht aus einer zylindrischen Hülse 2, die an einem, eine zylindrische Öffnung 10 aufweisenden Ende 2a eine sich radial nach innen erstreckende Schulter 3 als Anschlag für einen Druckstift 4 aufweist, wobei in der Hülse 2 der Druckstift 4 auf- und abbewegbar gegen eine Feder 5 gelagert ist. In Figur 2 ist eine Aufsicht auf das Andruckelement aus Figur 1 gezeigt, wobei eine Schlüsselfläche 8 mit Schlüsselweite D beispielhaft an dem Hülsenelement 9 dargestellt ist zum drehenden Eingriff eines Schraubenschlüssels oder Werkzeuges am Hülsenelement 9.

Der Druckstift 4 weist ein Betätigungsende 4a und einen Halteabschnitt 4b auf, wobei der Druckstift 4 mit seinem Halteabschnitt 4b an der Schulter 3 anschlägt. Das Betätigungsende 4a des Druckstiftes 4 ragt durch die Öffnung 10 hindurch. Der Druckstift 4 besteht aus einem Kunststoffmaterial, wie nachfolgend angegeben.

Die zylindrische, im Wesentlichen rohrförmige Hülse 2, ist als buchsenförmige Hülse ausgebildet und weißt ein Außengewinde 6 auf mit welchem das Andruckelement 1 an einer Vorrichtung festlegbar ist. Die lichte Öffnung des Innenbundes der Hülse 2 ist mit geringem Spiel von einem außen zylindrischen Druckstift 4 durchsetzt, welcher aus dem oberen Ende der Hülse 2 hervorsteht. Es hat sich bei Versuchsreihen gezeigt, dass mit der in Figur 1 dargestellten Variante eines federnden Andruckelements 1 mit einem Druckstift 4 aus einem Kunststoffmaterial aus einem Gemisch aus im Wesentlichen den folgenden beiden Komponenten:
a. teilkristalliner Thermoplast und
b. Molybdän
die der Erfindung zu Grunde liegende Aufgabe gelöst werden kann, wobei besonders geeignet eine Verbindung ist, bei dem der so zusammengesetzte Kunststoff alle folgende Materialkennwerte besitzt:
- eine Shorehärte von 80 bis 84 gemäß der Skala D, besonders geeignet mit einer Shorehärte 82;
- eine Streckspannung von 75 bis 85 MPa, bevorzugt von 80 MPa;
- ein E-Modul von 2900 bis 3500 MPa aufweist;
- eine Kugeldruckhärte von 155 bis 185 MPa;
- eine Reißdehung gleich oder größer 50%;

Die Erfindung beschränkt sich ferner in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So kann, wenn auch nicht explizit dargestellt, zum Beispiel eine Ausführung vorgesehen werden, bei der in der Hülse eine Gleitführungsbuchse angeordnet ist, die außen gegen den Innenumfang der Hülse 2 festsitzt und den sich in das Innere der Hülse 2 hineinerstreckenden Teil des Druckstiftes 4 mit einer Gleitpassung oder dergleichen umgreift.

## Patentansprüche

1. Federndes Andruckelement (1) zur bestimmungsgemäßen Verwendung für den Werkzeug-, Vorrichtungs- und Maschinenbau bestehend aus einer zylindrischen Hülse (2), die an einem, eine zylindrische Öffnung (10) aufweisenden Ende (2a) eine sich radial nach innen erstreckende Schulter (3) als Anschlag für einen Druckstift (4) aufweist, wobei in der Hülse (2) der Druckstift (4) auf- und abbewegbar gegen eine Feder (5) federgelagert ist und ein Betätigungsende (4a) des Druckstiftes (4) durch die Öffnung (10) hindurchragt, **dadurch gekennzeichnet, dass** der Druckstift aus einem aus einem Übergangsmetalladditiv gefüllten Kunststoffmaterial besteht.

2. Federndes Andruckelement (1) gemäß Anspruch 1, **dadurch gekennzeichnet, dass** das Kunststoffmaterial eine Shorehärte von 80 bis 84 gemäß der Skala D aufweist.

3. Federndes Andruckelement (1) gemäß Anspruch 1 oder 2, **dadurch gekennzeichnet, dass** das Kunststoffmaterial eine Streckspannung von 75 bis 85 MPa aufweist.

4. Federndes Andruckelement (1) gemäß einem der vorhergehenden Ansprüche, **dadurch gekennzeichnet, dass** das Kunststoffmaterial ein E-Modul von 2900 bis 3500 MPa aufweist.

5. Federndes Andruckelement (1) gemäß einem der vorhergehenden Ansprüche, **dadurch gekennzeichnet, dass** das Kunststoffmaterial eine Kugeldruckhärte von 155 bis 185 MPa aufweist.

6. Federndes Andruckelement (1) gemäß einem der vorhergehenden Ansprüche, **dadurch gekennzeichnet, dass** das Kunststoffmaterial eine Reißdehung gleich oder größer 50% aufweist.

7. Federndes Andruckelement (1) gemäß einem der vorhergehenden Ansprüche, **dadurch gekennzeichnet, dass** das Kunststoffmaterial als ein Gemisch aus im Wesentlichen den folgenden beiden Komponenten ausgebildet ist:
a. teilkristalliner Thermoplast
b. Molybdän

8. Federndes Andruckelement (1) gemäß einem der vorhergehenden Ansprüche, **dadurch gekennzeichnet, dass** als teilkristallines Thermoplast ein Polyamid oder Polyoxymethylen verwendet wird.

9. Federndes Andruckelement (1) gemäß einem der vorhergehenden Ansprüche, **dadurch gekennzeichnet**, das die Hülse (2) am Außenumfang ein Gewinde (6) aufweist.

10. Federndes Andruckelement (1) gemäß einem der vorhergehenden Ansprüche, **dadurch gekennzeichnet**, das die Feder als Schraubendruckfeder ausgebildet ist und/oder eine den Druckstift (4) umschließende und ihn an der Hülse (2) führende Gleitführungsbuchse vorgesehen ist.

## Claims

1. A resilient pressure-applying element (1) for intended use for toolmaking, device construction and mechanical engineering, consisting of a cylindrical sleeve (2) comprising a radially inwardly extending shoulder (3) as a stop for a pressure pin (4) at one end (2a) comprising a cylindrical opening (10), wherein in the sleeve (2) the pressure pin (4) is spring-mounted so as to be movable up and down against a spring (5) and an actuating end (4a) of the pressure pin (4) projects through the opening (10), **characterized in that** the pressure pin consists of a plastic material filled with a transition metal additive.

2. A resilient pressure-applying element (1) according to claim 1, **characterized in that** the plastic material has a Shore hardness of 80 to 84 according to scale D.

3. A resilient pressure-applying element (1) according to claim 1 or 2, **characterized in that** the plastic material has a yield stress of 75 to 85 MPa.

4. A resilient pressure-applying element (1) according to one of the preceding claims, **characterized in that** the plastic material has a modulus of elasticity of 2900 to 3500 MPa.

5. A resilient pressure-applying element (1) according to one of the preceding claims, **characterized in that** the plastic material has a ball indentation hardness of 155 to 185 MPa.

6. A resilient pressure-applying element (1) according to one of the preceding claims, **characterized in that** the plastic material has a elongation at break equal to or greater than 50%.

7. A resilient pressure-applying element (1) according to one of the preceding claims, **characterized in that** the plastic material is formed as a mixture of substantially the following two components:
a. Semi-crystalline thermoplastic material
b. Molybdenum.

8. A resilient pressure-applying element (1) according to one of the preceding claims, **characterized in that** a polyamide or polyoxymethylene is used as the semi-crystalline thermoplastic.

9. A resilient pressure-applying element (1) according to one of the preceding claims, **characterized in that** the sleeve (2) has a thread (6) on the outer periphery.

10. A resilient pressure-applying element (1) according to one of the preceding claims, **characterized in that** the spring is designed as a helical pressure spring and/or a sliding guide bush enclosing the pressure pin (4) and guiding it on the sleeve (2) is provided.

## Revendications

1. Elément de pression résistant (1) destiné à la fabrication d'outils, à la construction de dispositifs et à la construction mécanique, constitué d'un manchon cylindrique (2) comprenant un épaulement (3) s'étendant radialement vers l'intérieur et servant de butée à une goupille de pression (4) à une extrémité (2a) comprenant une ouverture cylindrique (10), dans laquelle, la goupille de pression (4) est montée dans le manchon (2) sur ressort de manière à pouvoir être montée et descendue contre un ressort (5) et une extrémité d'actionnement (4a) de la broche de pression (4) fait saillie à travers l'ouverture (10), **caractérisé en ce que** la broche de pression (4) est constituée d'une matière plastique remplie d'un additif pour métal de transition.

2. Elément de pression élastique (1) selon la revendication 1, **caractérisé en ce que** le matériau plastique présente une dureté Shore de 80 à 84% selon l'échelle D.

3. Elément de pression élastique (1) selon la revendication 1 ou 2, **caractérisé en ce que** le matériau plastique présente une limite élastique de 75 à 85 MPa.

4. Elément de pression élastique (1) selon l'une des revendications précédentes, **caractérisé en ce que** le matériau plastique présente un module d'élasticité de 2900 à 3500 MPa.

5. Elément de pression élastique (1) selon l'une des revendications précédentes, **caractérisé en ce que** le matériau plastique présente une dureté par pénétration de billes de 155 à 185 MPa.

6. Elément élastique d'application de pression (1) selon l'une des revendications précédentes, **caractérisé en ce que** le matériau plastique présente un allongement à la rupture égal ou supérieur à 50%.

7. Elément d'application de pression élastique (1) selon l'une des revendications précédentes, **caractérisé en ce que** le matériau plastique est formé sous la forme d'un mélange composé essentiellement des deux composants suivants:
a. une matière thermoplastique semi-cristalline
b. Molybdène

8. Elément de pression élastique (1) selon l'une des revendications précédentes, **caractérisé en ce qu'**un polyamide ou polyoxyméthylène est utilisé comme thermoplastique semi-cristallin.

9. Elément de pression élastique (1) selon l'une des revendications précédentes, **caractérisé en ce que** le manchon (2) présente un filetage (6) sur la périphérie externe.

10. Elément de pression élastique (1) selon l'une des revendications précédentes, **caractérisé en ce que** le ressort est conçu sous la forme d'un ressort de pression hélicoïdal et / ou d'une bague de guidage coulissante entourant la broche de pression (4) et la guidant sur le manchon (2) est fourni.
